# EUROPEAN PATENT SPECIFICATION

(11) **EP 2 201 185 B1**
(45) Date of publication and mention of the grant of the patent: **12.01.2011**
(21) Application number: 08803791.6
(22) Date of filing: 05.09.2008
(51) Int. Cl.: E03B 1/04, E03D 5/00

(54) **SYSTEM USED TO FEED WC FLUSHING TANKS WITH RECYCLED WATER**
ZUM SPEISEN VON WC-SPÜLBEHÄLTERN MIT RECYCELTEM WASSER VERWENDETES SYSTEM
SYSTÈME UTILISÉ POUR ALIMENTER LES RÉSERVOIRS DE CHASSE D'EAU DES WATER-CLOSETS EN EAU RECYCLÉE

(30) Priority: 07.09.2007 IT MC20070175
(43) Date of publication of application: 30.06.2010
(73) Proprietor: Postacchini, Dante, 63023 Fermo (AP) (IT); Postacchini, Roberto, 63023 Fermo (AP) (IT)
(72) Inventor: Postacchini, Dante, 63023 Fermo (AP) (IT); Postacchini, Roberto, 63023 Fermo (AP) (IT)
(74) Representative: Baldi, Claudio
(86) International application number: PCT/EP2008/061822
(87) International publication number: WO 2009/030768

(56) References cited:
- DE-U1-202004 005 418
- US-A- 5 251 346
- US-A1- 2004 050 429

## Description

The present patent application relates to a system used to feed WC flushing tanks with recycled water.

In a time when water resources are scarce, more and more attention is paid to situations that originate water waste or excessive consumption.

It has been ascertained that water domestic consumption is heavily determined by the water used for WC flushing tanks.

In view of the above, attempts have been made to find a way to save on this specific water consumption and recycle water that has been previously used for other domestic uses.

Nevertheless, it must be noted that solutions have always proved to be complicated and not very functional, as shown by the fact that they have had no practical diffusion.

Document US-A-5251346 is considered to represent the most relevant state of the art for claim 1. This document discloses a system used to feed WC flushing tanks with recycled water, wherein said system comprises the following parts:
- a recovery tank of the water coming from the drain pipe of a sink and/or another sanitary fitting, which is internally provided with a pump installed on the bottom wall and with a float - switch used to detect the level of the water contained in it;
- a pipe provided with a feed check valve designed to provide the water connection between the tank and the branch of the domestic water network that feeds the flushing tank provided with a water inlet valve usually controlled by a float;
- a normally open electrovalve installed along the said branch of the domestic water network upstream the insertion point of the branch from the tank;

Furthermore, document US-A-5251346 discloses:
- an electronic control unit interfaced with the pump and the float -switch installed in the recovery tank, with a (water pressure sensitive) sensor installed in said recovery tank, and with the electrovalve inserted in the branch of the domestic water network;
   It is also noted that the control unit described in US-A-5251346 is programmed as to operate in a way similar to the claimed system, however, this way of functioning is achieved without the interaction of a flow sensor installed in a specific place of the system, as specified in claim 1. Indeed, the subject-matter of claim 1 differs from the system disclosed in US-A-5251346 in that
- a flow sensor is installed in the section of the system comprised between the flushing tank and the insertion point of the pipe in the branch;
- the electronic control unit is also interfaced with the flow sensor; it being also provided that the control unit is programmed in such a way to operate alternatively as follows:
- when the flow sensor detects a water flow in the idle condition of the system of the invention and transmits the information about the emptying of the flushing tank and when the float - switch of the tank transmits the information about the presence of sufficient quantity of recycled water, it closes the electrovalve and activates the pump, thus favouring the water flow into the pipe and, then, into the branch of the water network and in the flushing tank, until the flow sensor signals the stop of the flow following to the closing of the valve of the flushing tank, usually operated by the float after filling;
- when, following to the emptying of the flushing tank informed by the flow sensor, it has received the information from the float -switch of the tank about the absence of recycled water, it omits to activate the pump.

US2004/0050429 discloses a system and method for collecting and distributing gray water comprising flow sensors installed along the line constituting the gray water collection and distribution system.

Although document US 2004/050429 A1 discloses *"flow sensors"* installed along the lines constituting the gray water collection and distribution system, no hint is present to install the flow sensor in the section of the system comprised between the flushing tank and the insertion point of the pipe in the branch.

DE202004005418 discloses an Energy saving water supply for building having the consumer units gravity fed from a high mounted tank which is refilled from a rainwater cistern with a submersible pump.

The specific purpose of the present invention is to devise an effective versatile system that can be installed in any room-bathroom, including pre-existing ones.

As a matter of fact, the system of the invention is finally able to recycle the water that has been previously used in the sink, other sanitary fittings (such as the bathtub) and also in household appliances installed in the same room-bathroom (such as a washing machine) and use it in the WC flushing tank.

Another purpose of the invention is to give the system a simple inexpensive structure, composed of a few "dedicated" parts designed to operate in coordination with the sanitary fittings and the branch line of the domestic water network installed in the room-bathroom in a simple, practical and inexpensive way.

The idea on which the present invention is based is to provide a recovery tank, preferably positioned under the sink, designed to receive the water previously used in the sink, in other sanitary fittings and in the washing machine installed in the same room.

The recovery tank must be connected by means of an ordinary supply pipe, with the branch of the domestic water network that feeds the traditional WC flushing tank.

Through a series of suitable valves and sensors (that will be illustrated in detail below) and thanks to the management and control activity of an electronic control unit, the water collected in the recovery tank is conveyed towards the WC flushing tank every time the tank is flushed.

During the various use cycles of the recycled water, until a suitable water reserve is available, the system of the invention will automatically interrupt the supply of "clean" water brought by the said branch of the domestic water network that is normally connected to the WC flushing tank.

Because of the system of the invention, the WC flushing tank is reloaded - until it is possible - with the water that has been already used in the sanitary fittings or washing machine, without having to get water from the domestic network, thus considerably limiting the use of water resources.

Obviously, the inevitable presence of soap or detergent in the recycled water is not a contra-indication against use; on the contrary, the presence of the soap/detergent produces positive effects since it contributes to increase the WC hygienic level.

Finally, it must be noted that the system of the invention is also capable to automatically remedy the possible absence of water inside the recovery tank.

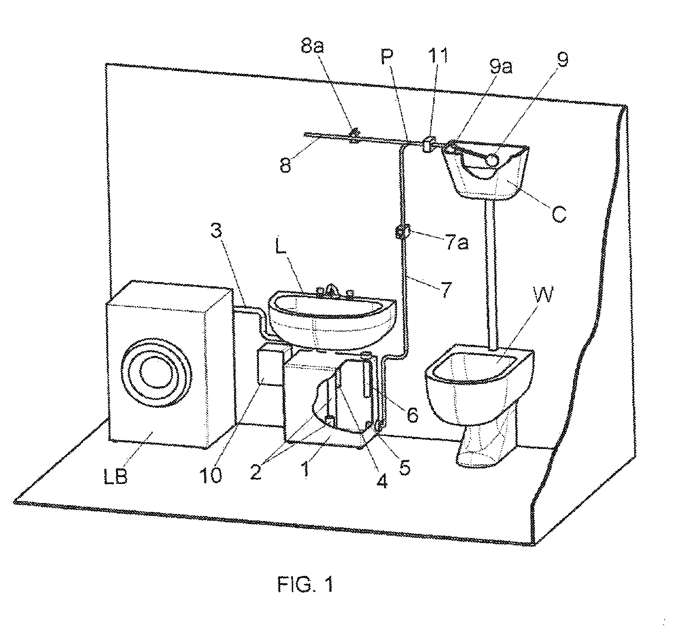

In such a case, the system will fill the WC flushing tank with the "clear" water normally provided by the domestic water network, at least until the recovery tank is not filled again.
For purposes of clarity the description of the present invention continues with reference to the enclosed drawing, which is intended for purposes of illustration only and not in a limiting sense, wherein figure 1 is a diagrammatic drawing of the system of the invention installed in a typical room-bathroom.

As mentioned above, the system of the invention comprises a recovery tank (1) that, in the constructive embodiment shown in fig. 1, is designed to receive the water already used in the sink (L) and in the washing machine (LB).

In particular, the water coming from the sink (L) and the washing machine (LB) is poured into the tank (1) by means of corresponding delivery pipes (2, 3), while the possible water excess inside the tank (1) is eliminated by means of an "overflow" valve provided on top of the tank and connected to the sewage by means of an outflow pipe (4).

The tank (1) is also provided with a pump (5) that draws approximately at the height of the bottom wall and with a float-switch (6) designed to detect the level of the water contained in the tank (1).

The pump (5) is designed to feed, with the water contained in the tank (1), a pipe (7) that is inserted, at the opposite end, into a branch (8) of the domestic water network.

In particular, it is the branch (8) that is inserted into the flushing tank (C) of the WC (W), with the interposition of a traditional inlet valve (9a) that is traditionally controlled by a float (9).

Additional parts of the system of the invention are a feed check valve (7a) mounted along the pipe (7) situated between the recovery tank (1) and the branch (8) of the domestic water network, a flow sensor (11) mounted in the section of the branch comprised between the insertion point (P) of the pipe (7) and the flushing tank (C), and a normally open electrovalve mounted along the branch (8) upstream the insertion point (P) of the pipe (7).

The operation of the entire system is automatically controlled by an electronic control unit (10) that is suitably interfaced with the aforementioned parts, as illustrated in detail below.

To that end, the operation cycle of the system of the invention starts every time the water contained in the flushing tank (C) is flushed towards the WC (W).

In particular, the emptying of the flushing tank (C) is detected by the flow sensor (11) when the sensor (11) detects that "clear" water has resumed flowing along the branch (8) following to the opening of the valve (9a).

This information acquired by the flow sensor (11) is transmitted to the control unit (10), which is responsible for the entire operation of the system of the invention.

At the same time, the control unit (10) also receives from the float-switch (6) of the recovery tank (1) the information about the possible presence of water inside the recovery tank (1) and, in case of the presence of water, it immediately activates the operation of the pump (5) and the closing of the electrovalve (8a).

In this way the recycled water contained in the tank (1) is conveyed into the pipe (7), crossing the feed check valve (7a) to reach the branch (8) of the water network, through which it is finally conveyed inside the flushing tank (C).

It is important to note that for the entire duration of a similar operation phase, the electrovalve (8a) mounted along the branch (8) of the water network is induced to remain closed in such a way that the "clear" water coming from the network cannot flow towards the flushing tank (C).

The control unit (10) sends the pump (5) a stop control as soon as the recycled water coming from the tank (1) has completed the filling of the flushing tank (C).

The information about the said filling is transmitted to the control unit (10) by the flow sensor (11), which immediately detects the stop of the recycled water flow inside the pipe (7) that is produced as soon as the float (9) of the flushing tank (C) has closed the inlet valve (9a) once the filling has been completed.

As mentioned above, the system of the invention is able to fill the flushing tank (C) also in the case in which the recovery tank (1) is empty.

As a matter of fact, as soon as it receives from the float-switch (6) of the tank (1) the information about the draining of the recycled water reserve, the control unit (10) omits to actuate the pump (5) and to close the electrovalve (8a) provided along the branch (8) of the domestic water network.

This guaranteed that the filling of the flushing tank (C) is normally ensured by the "clear" water coming from the branch (8).

In this phase, the presence of the feed check valve (7a) inserted along the pipe (7) that protrudes from the tank (1) is fundamental.

A similar valve (7a) prevents the "clear" water brought by the branch (8) from pouring also in the recovery tank (1) in addition to the flushing tank (C).

Nevertheless, as soon as the recovery tank (1) is filled again, the float-switch (6) will send the information to the control unit (10), which will use it in case of a new emptying of the flushing tank (C), activating a new filling cycle of the flushing tank (C) with recycled water.

The system of the invention is also provided with an additional feature for the good filling of the flushing tank (C) of the WC (W).

This feature is actuated in the situation in which the recovery tank (1) contains recycled water, but not in sufficient quantity to guarantee the complete filling of the flushing tank (C).

In this case the initial operation of the system of the invention is normal, meaning that, following to the emptying of the flushing tank (C), the control unit (10) closes the electrovalve (8a) and simultaneously actuates the pump (5) of the tank (1).

Nevertheless, as soon as the recycled water reserve contained in the tank (1) is finished, before the flushing tank (C) is filled completely, the control unit (10) interrupts the operation of the pump (5) and reopens the electrovalve (8a) mounted on the branch (8) of the water network.

In this way, "clear" water can be added to the previous recycled water, until the flushing tank (C) is filled completely, closing the inlet valve (9a).

It must be noted that the operative logic of the control unit (10) is the simple consequence of the information received from the float-switch (6) about the draining of the recycled water in the tank (1); it being provided that, upon receiving a similar piece of information, the control unit (10) reacts stopping the pump (5) and opening the electrovalve (8a).

## Claims

1. System used to feed WC flushing tanks with recycled water, comprising the following parts:
- a recovery tank (1) of the water coming from the drain pipe (2) of a sink (L) and/or another sanitary fitting, which is internally provided with a pump (5) installed on the bottom wall and with a float-switch (6) used to detect the level of the water contained in it;
- a pipe (7) provided with a feed check valve (7a) designed to provide the water connection between the tank (1) and the branch (8) of the domestic water network that feeds the flushing tank (C) provided with a water inlet valve (9a) usually controlled by a float (9);
- a flow sensor (11) installed in the section of the system comprised between the flushing tank (C) and the insertion point (P) of the pipe (7) in the branch (8);
- a normally open electrovalve (8a) installed along the said branch (8) of the domestic water network downstream the insertion point (P) of the branch (7) from the tank (1);
- an electronic control unit (10) interfaced with the pump (5) and the float-switch (6) installed in the recovery tank (1), with the flow sensor (11), and with the electrovalve (8a) inserted in the branch (8) of the domestic water network; it being also provided that the control unit (10) is programmed in such a way to operate alternatively as follows:
- when the flow sensor (11) detects a water flow in the idle condition of the system of the invention and transmits the information about the emptying of the flushing tank (C) and when the float-switch (6) of the tank (1) transmits the information about the presence of sufficient quantity of recycled water, it closes the electrovalve (8a) and activates the pump (5), thus favouring the water flow into the pipe (7) and, then, into the branch (8) of the water network and in the flushing tank (C), until the flow sensor (11) signals the stop of the flow following to the closing of the valve (9a) of the flushing tank (C), usually operated by the float (9) after filling;
- when, following to the emptying of the flushing tank (C) informed by the flow sensor (11), it has received the information from the float-switch (6) of the tank (1) about the absence of recycled water, it omits to activate the pump (5).

2. System as claimed in claim 1, **characterised in that** the control unit (10) is additionally programmed to operate as follows:
- when during the operation of the pump (5) the float-switch (6) transmits the information about the draining of the recycled water inside the tank (1), it deactivates the pump (5) and opens the electrovalve (8a) inserted in the branch of the domestic water network (8).

3. System as claimed in the first or in both claims, **characterised in that** an additional supply pipe (3) is inserted into the recovery tank (1), which supplies the water drained from one or more household appliances (LB).

4. System as claimed in one or more of the above claims, **characterised in that** the recovery tank (1) is provided on top with a traditional "overflow" valve that feeds a drain pipe (4) normally inserted into the sewage.

## Patentansprüche

1. Anlage zur Speisung von Toiletten-Spülkästen mit Wasser aus vorhergehenden Verwendungszwecken, die folgende Bestandteile umfasst:
- einen Tank (1) zur Rückgewinnung des Wassers, das aus dem Abflussrohr (2) eines Waschbeckens (L) und/oder einer anderen Sanitäreinrichtung stammt, wobei der Tank inwendig mit einer auf der Bodenwand befindlichen Pumpe (5) sowie einem Schwimmerschalter (6) ausgestattet ist, der den darin befindlichen Wasserstand feststellt;
- eine Rohrleitung (7), die mit einem Rückschlagventil (7a) versehen ist, das zur Sicherung der Wasserverbindung zwischen dem Tank (1) und der Gabelung (8) der Trinkwasserleitung dient, durch die der Spülkasten (C) versorgt wird, der üblicherweise mit einem Einlaufventil (9a) ausgestattet ist, das von einem entsprechenden Schwimmer (9) gesteuert wird;
- einen Flussmessfühler (11), der in dem Abschnitt der Anlage montiert ist, der sich zwischen dem Spülkasten (C) und der Einmündungsstelle (P) der Rohrleitung (7) in die Gabelung (8) befindet;
- ein Magnetventil (8a), normal offen, das auf der Gabelung (8) der Wasserleitung nach der Einmündungsstelle (P) der Rohrleitung (7) montiert ist, die vom Tank (1) ausgeht;
- eine elektronische Steuereinheit (10), die mit der Pumpe (5) und dem Schwimmerschalter (6), die sich im Rückgewinnungstank (1) befinden, mit dem Flussmessfühler (11) sowie mit dem Magnetventil (8a) verbunden ist, das in die Gabelung (8) des Trinkwassernetzes eingekuppelt ist; wobei außerdem vorgesehen ist, dass die Steuereinheit (10) so programmiert ist, dass sie wechselweise Folgendes bewirkt:
- wenn der Flussmessfühler (11), der in Ruhestellung der Anlage einen Wasserfluss feststellt, ihr die Information über die erfolgte Entleerung des Spülkastens (C) und der Schwimmerschalter (6) des Tanks (1) ihr die Information über das Vorliegen einer ausreichenden Menge recycelten Wassers überträgt, gibt sie die Schließung des Magnetventils (8a) sowie die Betätigung der Pumpe (5) frei, so dass das Wasser in die Rohrleitung (7) und anschließend in die Gabelung (8) der Trinkwasserleitung sowie in den Spülkasten (C) fließen kann, bis der Flussmessfühler (11) ihr die Unterbrechung des Wasserzuflusses infolge der Schließung des Ventils (9a) des Spülkastens (C) anzeigt, die normalerweise durch den entsprechenden Schwimmer (9) nach erfolgter Befüllung bewirkt wird;
- wenn sie hingegen nach der durch den Flussmessfühler (11) angezeigten Entleerung des Spülkastens (C) vom Schwimmerschalter (6) des Tanks (1) die Information über das Fehlen von recyceltem Wasser erhält, unterbricht sie die Betätigung der Pumpe (5).

2. Anlage gemäß Anspruch 1, **dadurch gekennzeichnet, dass** die Steuereinheit (10) darüber hinaus so programmiert ist, dass sie Folgendes bewirkt:
- wenn der Schwimmerschalter (6) im Laufe des Betriebs der Pumpe (5) ihr die Information über das Fehlen von recyceltem Wasser im Tank (1) überträgt, schaltet sie die Pumpe (5) aus und das Magnetventil (8a), das in die Gabelung der Trinkwasserleitung (8) eingekuppelt ist, in den Öffnungszustand um.

3. Anlage gemäß dem erstem oder beiden vorstehenden Ansprüchen, **dadurch gekennzeichnet, dass** in den Rückgewinnungstank (1) ein weiteres Zuflussrohr (3) eingekuppelt ist, das ihn mit dem Wasser versorgt, das aus einem oder mehreren Elektrohaushaltsgeräten (LB) abgelassen wird.

4. Anlage gemäß einem oder mehreren der vorstehenden Ansprüche, **dadurch gekennzeichnet, dass** der Rückgewinnungstank (1) oben mit einem herkömmlichen Überlaufventil ausgestattet ist, das ein Abflussrohr (4) speist, das normalerweise in die Kanalisation eingekuppelt ist.

## Revendications

1. Installation pour alimenter avec de l'eau provenant d'utilisations précédentes les cassettes de déchargement des water-closets, comprenant les composants suivants:
- un réservoir (1) de récupération de l'eau provenant du tuyau de décharge (2) d'un lavabo (L) et/ou de tout autre élément hygiénique-sanitaire, qui résulte équipé à son interne d'une pompe (5) positionnée en proximité de sa paroi du fond et d'un flotteur-interrupteur (6) apte à sonder le niveau de l'eau contenue;
- un conduit (7), équipé d'une soupape de retenue (7a), apte à assurer la liaison hydrique entre le dit réservoir (1) et la bifurcation du tuyau (8) du réseau hydrique domestique qui alimente la cassette de décharge (C) habituellement équipée d'une soupape d'entrée de l'eau (9a) commandée par son respectif flotteur (9);
- un détecteur de flux (11) monté sur le segment de l'installation compris entre la cassette de décharge (C) et le point d'embranchement (P) du dit conduit (7) de la dite bifurcation du tuyau (8);
- une soupape électrique (8a), normalement ouverte, montée le long de la dite bifurcation du tuyau (8) du réseau hydrique domestique, en aval du point d'embranchement (P) du dit conduit (7) provenant du réservoir (1);
- une centrale électronique (10) interfacée avec la pompe (5) et le flotteur-interrupteur (6) positionnés dans le réservoir de récupération (1), avec le détecteur de flux (11), ainsi que la soupape électrique (8a) embranchée dans la bifurcation du tuyau (8) du réseau hydrique domestique ; étant également prévu que cette centrale (10) soit programmée à fonctionner alternativement comme suit:
- lorsque le détecteur de flux (11), qui registre un flux d'eau en condition de repos de l'installation, lui transmet l'information que la cassette de décharge (C) s'est vidée et que le flotteur-interrupteur (6) du réservoir (1) lui transmet l'information de la présence d'une quantité d'eau recyclée suffisante, elle active la fermeture de la soupape électrique (8a) et l'actionnement de la dite pompe (5), en favorisant ainsi l'afflux de l'eau dans le conduit (7) et, en succession, dans la bifurcation du tuyau (8) du réseau hydrique domestique et dans la cassette même (C), jusqu'à ce que le dit détecteur de flux (11) lui signale l'arrêt du flux en conséquence de la fermeture de la soupape (9a) de la cassette (C), habituellement effectuée par le respectif flotteur (9), à la suite du remplissage qui s'est effectué;
- tandis que, si suite au vidage de la cassette (C) qui lui a été signalé par le même détecteur de flux (11), elle reçoit l'information de la part du flotteur-interrupteur (6) du réservoir (1) qu'il n'y a pas d'eau recyclée, elle omet d'activer la pompe (5).

2. Installation selon la revendication 1, **caractérisée en ce que** la dite centrale (10) résulte ultérieurement programmée pour fonctionner comme suit:
- lorsque, pendant le fonctionnement de la pompe (5), le flotteur-interrupteur (6) lui transmet l'information relative à l'épuisement de l'eau recyclée dans le réservoir (1), elle pourvoit à désactiver la pompe même (5) et à commuter en position d'ouverture la soupape électrique (8a) embranchée sur la bifurcation du tuyau du réseau hydrique domestique (8).

3. Installation selon la première ou les deux revendications précédentes, **caractérisée en ce que** sur le dit réservoir de récupération (1), un autre tuyau d'adduction (3) est embranché, tuyau qui l'alimente avec l'eau déchargée par un ou plusieurs électroménagers (LB).

4. Installation selon l'une ou plusieurs des revendications précédentes, **caractérisée en ce que** le dit réservoir de récupération (1) adopte vers son sommet une soupape traditionnelle du type "trop plein" qui alimente un tuyau de décharge (4) habituellement embranché sur le réseau d'égouts.
